# EUROPÄISCHE PATENTSCHRIFT

(11) **EP 2 010 741 B1**
(45) Veröffentlichungstag und Bekanntmachung des Hinweises auf die Patenterteilung: **10.08.2011**
(21) Anmeldenummer: 07712338.8
(22) Anmeldetag: 27.02.2007
(51) Int. Cl.: E05F 5/10, F16F 9/00, F16F 9/516

(54) **DÄMPFER FÜR MÖBEL**
DAMPER FOR FURNITURE
AMORTISSEUR POUR MEUBLES

(30) Priorität: 01.03.2006 DE 202006003197 U
(43) Veröffentlichungstag der Anmeldung: 07.01.2009
(60) Teilanmeldung: 08164908.9
(73) Patentinhaber: Hettich-ONI GmbH & Co. KG, 32602 Vlotho-Exter (DE)
(72) Erfinder: ROMMELMANN, Cord, 32694 Dörentrup (DE); BECKMANN, Wolfgang, 32609Hüllhorst (DE)
(74) Vertreter: Dantz, Jan Henning
(86) Internationale Anmeldenummer: PCT/EP2007/051849
(87) Internationale Veröffentlichungsnummer: WO 2007/099100

(56) Entgegenhaltungen:
- EP-A- 0 198 180
- WO-A-89/05388
- DE-A- 207 033
- DE-A1- 2 623 873
- DE-B3- 10 343 928
- DE-U1- 20 107 426
- GB-A- 2 268 997
- US-A- 4 629 167
- US-A- 4 881 723
- US-A- 4 881 723

## Beschreibung

Die vorliegende Erfindung betrifft einen Dämpfer für Möbel, insbesondere für Scharniere, mit einem Gehäuse, in dem ein mit einer Kolbenstange verbundener Kolben verschiebbar aufgenommen ist, wobei ein Fluid bei einer Bewegung des Kolbens innerhalb des Gehäuses durch einen Strömungskanal am oder im Kolben strömt, wobei bei Bewegung des Kolbens in unterschiedliche Richtungen eine unterschiedliche Dämpfungskraft erhalten wird.

Es gibt Dämpfer für Möbel, bei denen in einem Kolben eine Mikrobohrung angeordnet ist, sodass ein Fluid bei Bewegung des Kolbens von einer Seite des Kolbens zur anderen strömen kann, so dass die Bewegung des Kolbens durch das Fluid gedämpft ist. Bei der Herstellung solcher Mikrobohrungen, die meist kleiner als 0,15 mm sind, besteht der Nachteil, dass der Herstellungsprozess zeitaufwendig ist, da einen hohe Genauigkeit gefordert wird und zudem die Werkzeuge einem hohen Verschleiß unterliegen. Bei geringen Maßabweichungen können die Dämpfungskräfte völlig unterschiedliche ausfallen. Zudem können Mikrobohrungen durch kleine Partikel leicht verstopfen. Daher ist der Einsatz von Schaumstoffelementen zum Volumenausgleich nicht möglich, da losgelöste kleine Partikel das System blockieren könnten. Schließlich wird bei kleinen Mikrobohrungen die Wand ausgewaschen, sodass sich der Durchmesser nach gewisser Zeit vergrößert. Dadurch ändern sich die Eigenschaften des Dämpfers.

Ferner sind Dämpfer bekannt, bei denen das Fluid über einen Ringspalt zwischen Kolben und Gehäusewand strömt. Auch hier haben geringste Maßabweichungen am Kolbendurchmesser oder beim Zylinderinnendurchmesser große Auswirkungen auf das Dämpfungsverhalten. Toleranzen können sich addieren und insbesondere kann bei Veränderung des Innendrucks sich die Gehäusewand aufbiegen und den Ringspalt vergrößern. Zudem können sich auch hier Verunreinigungen nachteilig auf das Dämpfungsverhalten auswirken.

Aus der DE 100 54 904 ist ein Dämpfungselement für bewegliche Möbelteile bekannt. Dabei ist an einem bewegbaren Kolben eine Ventileinrichtung mit einem ringförmigen elastischen Schiebeventil vorgesehen, die bei einer Bewegung des Kolbens in unterschiedlichen Richtung auch eine unterschiedlich große Dämpfung bewirkt. Der Aufbau einer solchen Ventileinrichtung ist jedoch vergleichsweise aufwendig und es können die oben genannten Problem des Verstopfens der Strömungskanäle auftreten.

Aus der DE 202 21 550 ist ein Dämpfer für bewegliche Möbelteile bekannt, bei dem bewegbare Ringscheiben vorgesehen sind, mittels denen Durchlassöffnungen in einem Kolben ganz oder teilweise abgedeckt werden. Dadurch kann zwar eine unterschiedliche Dämpfungskraft bei Bewegung des Kolbens in gegenüberliegende Richtungen erreicht werden, allerdings ist die Stärke der Dämpfungskraft nur schlecht einstellbar. Werden die Strömungsquerschnitte zu klein, erfolgt eine hohe Materialbelastung und ein schneller Verschleiß. Werden größere Strömungsquerschnitte realisiert, bleibt die Dämpfungskraft für viele Anwendungen zu gering.

Die EP 198 180, sowie die WO89/05388, koffenbart eine mit einem Fluid gefüllte gedämpfte Kolben-Zylinder-Einheit, bei der in Einfahr- und in Ausfahrrichtung unterschiedliche Dämpfungskräfte wirken. Hierfür ist ein beweglicher Kolbenring vorgesehen.
Die US 4881723 offenbart alle Merkmale des Oberbegriffs des Anspruchs 1.
Es ist daher Aufgabe der vorliegenden Erfindung, einen Dämpfer für Möbel zu schaffen, der in der Benutzung unempfindlich ist und individuell an den jeweiligen Einsatzzweck relativ genau angepasst werden kann.

Diese Aufgabe wird mit einem Dämpfer mit den Merkmalen des Anspruches 1 gelöst.

Der Querschnitt des Strömungskanals ist bereichsweise veränderbar, indem der Kolben relativ zu einer Platte bewegbar ist, wobei die Platte und/oder der Kolben sich radial erstreckende Nuten aufweist, die zumindest einen Teil des Strömungskanals bilden. Dadurch kann der Querschnitt des Strömungskanals relativ genau vorgegeben werden, wobei die an dem Kolben gelagerte Platte leicht herstellbar ist und sich bei Bedarf auch auswechseln lässt. Zudem kann der Dämpfer auf einfache Weise auf den jeweiligen Einsatzzweck eingestellt werden, da die Dämpfungskraft hauptsächlich von der Gestaltung des Strömungskanals am oder im Kolben abhängt, insbesondere vom Strömungsquerschnitt der radialen Nuten, die nicht nur eine Blende bilden, sondern von dem Fluid über eine gewisse Wegstrecke durchströmt werden. Diese Wegstrecke der radialen Nut kann vollständig zur Erzeugung von Reibungskräften und damit für einen Druckabfall des Fluides verwendet werden, was dann die Dämpfung bewirkt. Zudem lassen sich die Nuten wesentlich einfacher herstellen als Bohrungen durch Bohrwerkzeuge, da dabei Grate entstehen können, oder Öffnungen im Spritzgussverfahren, bei denen Spritzgusshäute gebildet werden können. Durch die Veränderung des Strömungskanals zwischen der Platte und dem Kolben kann sich diese zudem weniger leicht durch Verschmutzungen zusetzen, da Teile durch die Veränderung des Querschnittes nicht so leicht einklemmen können.

Auf einer Seite des Gehäuses ist erfindungsgemäß ein bewegbarer Ausgleichskolben vorgesehen, der abgedichtet an dem Gehäuse und der Kolbenstange geführt ist. Durch den Ausgleichskolben kann eine Volumenveränderung durch die Bewegung der Kolbenstange kompensiert werden. Der Ausgleichskolben weist eine Dichtung auf oder besteht aus einer Dichtung, wobei die Dichtung mit einer äußeren Dichtlippe am Gehäuse und mit einer inneren Dichtlippe an der Kolbenstange anliegt, so dass nur eine einzige Dichtung notwendig ist. Ferner kann der Ausgleichskolben vorzugsweise durch eine Feder zu dem Innenraum mit dem Kolben hin vorgespannt sein, die einen leichten Innendruck in dem Gehäuse erzeugt. Dabei kann die Feder an einem Deckel abgestützt sein, der an dem Gehäuse festgelegt ist und von der Kolbenstange durchgriffen ist, so dass ein einfach zu montierender Aufbau gegeben ist.

Gemäß einer bevorzugten Ausgestaltung der Erfindung sind der Kolben und die Platte gemeinsam auf einer Kolbenstange gelagert. Zur Veränderung des Querschnitt des Strömungskanals kann der Kolben in axiale Richtung bewegt werden, so dass ein radialer Abschnitt zwischen Kolben und Platte eine Art Ventilfunktion besitzt und die Bewegung des Kolbens in einer Richtung stärker gedämpft ist als in die gegenüberliegende Richtung. Dies ist insbesondere bei Möbeln ein Vorteil, da die Öffnungsbewegung leichtgängig erfolgen soll, aber beim Schließen eine Dämpfung von Vorteil ist. Die Dämpfungskraft kann in die gegenüberliegenden Bewegungsrichtungen des Kolbens um einen Faktor größer 5, vorzugsweise um einen Faktor 8 bis 12 unterschiedlich sein.

Vorzugsweise ist die Platte an der Kolbenstange festgelegt und der Kolben mit Spiel an der Kolbenstange gehalten. Dadurch kann mit wenigen Bauteilen ein Dämpfer bereitgestellt werden, bei dem der Strömungskanal verändert werden kann. Der Kolben kann dabei die Kolbenstange ringförmig umgeben und zwischen einer Platte und einer Schulter an der Kolbenstange bewegbar gehalten sein. Dadurch kann der Strömungskanal zwischen Kolben und Kolbenstange konstant bleiben, beispielsweise können entsprechende Ausnehmungen an einer ansonsten zylindrischen Aufnahme des Kolben vorgesehen sein. Aufgrund des axialen Spiels des Kolbens wird dann ein in radiale Richtung verlaufender Abschnitt des Strömungskanals im Querschnitt verändert. Dort kann dann der engste Querschnitt des Strömungskanals gebildet sein, der für die Drosseleigenschaften relevant ist. Die radialen Nuten sind dabei vorzugsweise so angeordnet, dass jeweils zwei diametral zur Kolbenachse gegenüberliegende Nuten vorgesehen sind. Dies gewährleistet eine gleichmäßige Dämpfungskraft und verhindert mögliche Querkräfte in radialer Richtung, die für ein Verklemmen des Kolbens sorgen könnten.

Gemäß einer weiteren Ausgestaltung der Erfindung ist die Platte an einer topfförmigen Aufnahme des Kolbens angeordnet.

Gemäß einer weiteren Ausführungsform ist zur Veränderung des Querschnitts des Strömungskanals der Kolben fest und die Platte biegbar ausgebildet. Dadurch kann der Dämpfer auf einfache Weise als Druckdämpfer ausgebildet sein, der beim Eindrücken der Kolbenstange in das Gehäuse schwergängig ist, während ein Herausziehen der Kolbenstange vergleichsweise leichtgängig erfolgen kann. Die Platte kann dabei als Scheibe aus Kunststoff, vorzugsweise aus einer Kunststofffolie, gebildet sein, da die Beanspruchung der Scheibe auch im Bereich des Strömungskanals relativ gering ist.

Wenn der Dämpfer als Druckdämpfer ausgebildet ist, können an der Kolbenstange und/oder dem Gehäuse Rastmittel, vorzugsweise mit biegbaren Schenkeln, zum Verbinden mit einem weiteren Bauteil vorgesehen sein, da die Zugbelastungen bei der Bewegung der Kolbenstange geringer sind als die Haltekräfte der Rastmittel, so dass der Dämpfer einfach und schnell montiert und auch nachgerüstet werden kann.

Die Erfindung wird nachfolgend anhand von mehreren Ausführungsbeispielen mit Bezug auf die beigefügten Zeichnungen näher erläutert. Es zeigen:
- Figur 1: eine teilweise geschnittene Seitenansicht einer Ausfüh- rungsform eines Dämpfers;
- Figur 2: eine perspektivische Detailansicht des Dämpfers der Figur 10;
- Figur 3: eine schematische Ansicht des Dämpfers der Figur 10 im Bereich des Kolbens;
- Figur 4A und 4B: zwei Ansichten des Dämpfers der Figur 1;
- Figur 6: eine Detailansicht eines zu dem Ausführungsbeispiel der Figur 1 modifizierten Dämpfers.

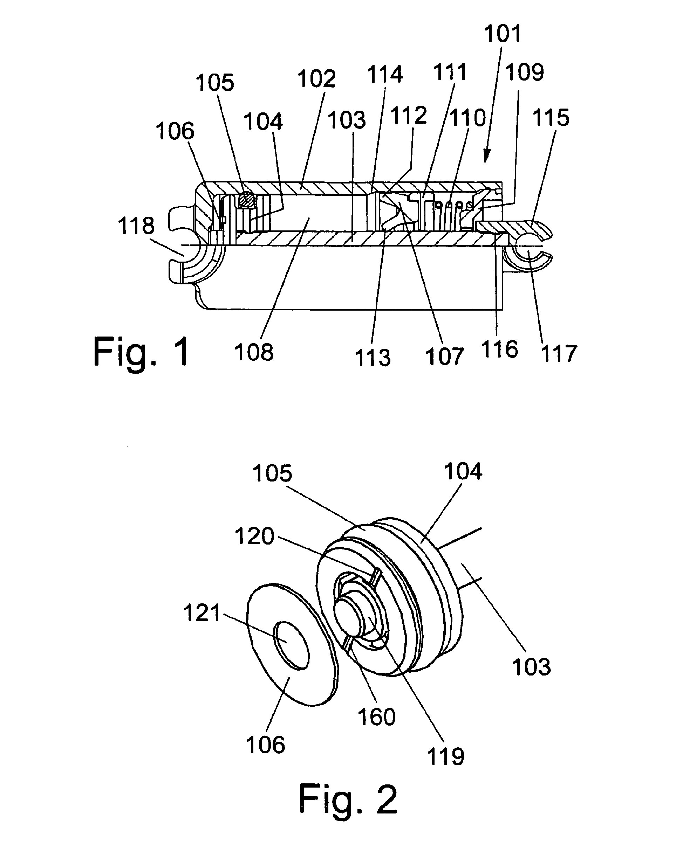

Bei der in den Figuren 1 bis 4 gezeigten Ausführungsform ist ein Dämpfer 101 vorgesehen, der ein zylindrisches Gehäuse 102 umfasst, in dem an einer Kolbenstange 103 ein Kolben 104 verschiebbar geführt ist. An einem äußeren Umfang des Kolbens 104 ist in einer Nut ein Dichtring 105 aufgenommen. Die Nut weist dabei eine Breite auf, die größer ist als der Querschnitt des Dichtringes 105, so dass dieser bei zu hohem Druck von der Innenwand des Gehäuses 102 in die Nut eingepresst werden kann, um zu hohe Reibungskräfte beim Bewegen des Kolbens 104 zu vermeiden.

Benachbart zu dem Kolben 104 ist an einem Ende der Kolbenstange 103 oder an einem Fortsatz des Kolbens 104 eine Platte 106 fixiert. An der gegenüberliegenden Seite des Kolbens 104 ist ein Ausgleichskolben in dem Gehäuse 102 aufgenommen, der eine Volumenänderung aufgrund des Bewegens der Kolbenstange 103 kompensiert. Der Ausgleichskolben umfasst einen Dichtring 107, der an einem Haltering 111 angeordnet ist. Der Dichtring 107 stellt eine Abdichtung zu einem Innenraum 108 in dem Gehäuse 102 her, wobei der Dichtring 107 eine äußere Dichtlippe 112 besitzt, die an der Innenseite des Gehäuses 102 anliegt, sowie eine innere Dichtlippe 113 besitzt, die an der Kolbenstange 103 anliegt. Dadurch kann die Dichtung 107 gleichzeitig eine Abdichtung an der Kolbenstange 103 als auch an dem Gehäuse 102 bereitstellen.

Die Dichtung 107 und der Haltering 111 sind über eine Feder 110 vorgespannt, die an dem Haltering 111 und an der gegenüberliegenden Seite an einem Deckel 109 anliegt. Der Deckel 109 ist dabei nur rastend an dem Gehäuse 102 festgelegt, da die Kräfte aufgrund der Feder 110 gering sind.

An der Kolbenstange 103 ist ein Rastelement 115 über eine Rastnase 116 an einer Nut oder Verprägung fixiert, das eine teilweise offene Öse 117 ausbildet, so dass ein weiteres Bauteil, beispielsweise eines Möbelscharniers über die Schenkel an der Öse 117 eingerastet werden kann, also eine einfach Montage möglich ist. Das Rastelement 115 löst sich nicht von der Kolbenstange 103, da ein Herausziehen der Kolbenstange 103 leichtgängig erfolgt und die Haltekräfte der einzelnen Rastmittel größer sind als die entgegenwirkenden Kräfte beim Herausziehen der Kolbenstange 103. Für die Rastnasen 116 kann an der Kolbenstange 103 eine Verprägung vorgesehen sein, so dass keine spanende Bearbeitung der Kolbenstange 103 erforderlich ist. Dadurch kann die aus Metall oder Kunststoff bestehenden Kolbenstange 103 im Durchmesser sehr dünn ausgebildet sein, vorzugsweise in einem Bereich zwischen 1,5mm bis 3,5 mm, insbesondere 2,0 mm bis 3,0 mm. Dadurch wird bei Ein- und Ausfahren der Kolbenstange 103 nur ein geringer Volumenausgleich notwendig.

Der Dämpfer 101 ist als Druckdämpfer ausgebildet, bei dem die Kraft zum Einfahren der Kolbenstange 103 mindestens fünfinal, vorzugsweise acht bis zwölf mal größer ist als die Kraft zum Herausziehen der Kolbenstange 103.

Zwischen dem Kolben 104 und der ringförmigen Platte 106 ist ein Strömungskanal 120 ausgebildet, der abschnittsweise durch zwei sich diametral zur Achse der Kolbenstange 103 gegenüberliegende radiale Nuten 160 gebildet ist. Der äußere Durchmesser der Platte 106 ist dabei geringer als der Durchmesser des Kolbens 104. In der Platte 106 ist eine Öffnung 121 mittig ausgespart, so dass die Platte 106 auf ein zapfenförmiges Ende 119 der Kolbenstange 103 oder des Kolbens 104 aufgesteckt werden kann. Zur Fixierung der Platte 106 wird dann das zapfenförmige Ende 119 verformt, so dass die Platte sicher an dem Kolben 104 gehalten ist.

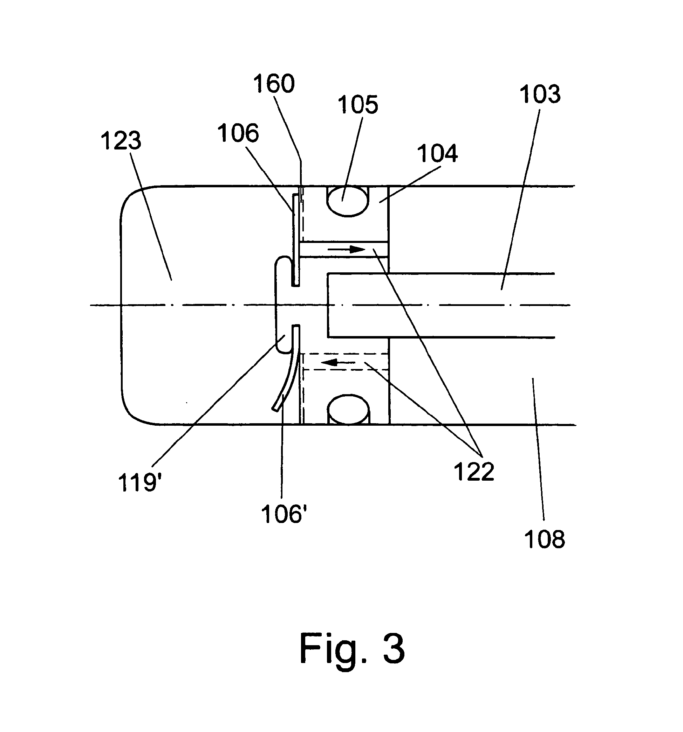

In Figur 3 ist ein verformtes Ende 119' dargestellt, das die Platte 106 statt an der Kolbenstange 103 am Kolben 104 fixiert, wobei auch andere Befestigungsmechaniken eingesetzt werden können. In dem Kolben 104 sind ein oder mehrere Durchgangskanäle 122 ausgebildet, die sich parallel zu Achse der Kolbenstange 103 erstrecken. Wird die Kolbenstange 103 in das Gehäuse 102 hineingedrückt (obere Hälfte der Figur 3) liegt die Platte 106 an dem Kolben 104 an und die Nuten 160 bilden den engsten Strömungsquerschnitt des Strömungskanals zwischen dem Innenraum 108 und dem gegenüberliegenden Innenraum 123. Das Hineindrücken der Kolbenstange 103 erfolgt daher schwergängig.

Wird an der Kolbenstange 103 gezogen (untere Hälfte der Figur 3), biegt sich die Platte 106 weg von dem Kolben 104, bis beispielsweise die Position 106' erreicht ist und die Nuten 160 beabstandet von der Platte 106 angeordnet sind und das Fluid von dem Innenraum 108 durch die Durchgangskanälen 122 zu dem Innenraum 123 strömen kann, ohne die Nuten 160 zwingend zu durchlaufen. Dadurch kann ein wesentlich größerer Strömungsquerschnitt genutzt werden, und das Herausziehen der Kolbenstange 103 erfolgt sehr leichtgängig. Hierfür ist die Platte biegbar ausgebildet und besteht beispielsweise aus Kunststoff, vorzugsweise aus einer Kunststofffolie PET, so dass nach einer Bewegung der Kolbenstange 103 die Platte 106 sich wieder in die Position benachbart zur dem Kolben 104 senkrecht zu der Achse der Kolbenstange 103 bewegt. Statt einem Umbiegen der Platte 106 ist es natürlich auch möglich, die Platte 106 von dem Kolben 104 abzuheben, wie dies bei dem ersten Ausführungsbeispiel der Fall ist

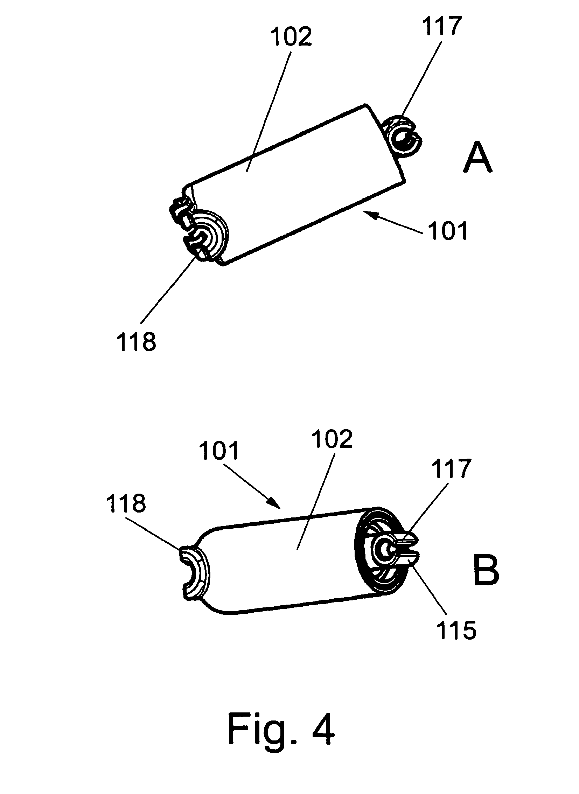

In den Figuren 4A und 4B ist ein Dämpfer 101 gezeigt, dessen Gehäuse 102 an einer Seite eine nach außen offene Öse 118 aufweist, wobei an der gegenüberliegenden Seite die nach außen offene Öse 117 des Rastelementes 115 an der Kolbenstange 103 zu sehen ist. Beide Ösen 117 und 118 ermöglichen eine einfache und schnelle Montage des Dämpfers 101.

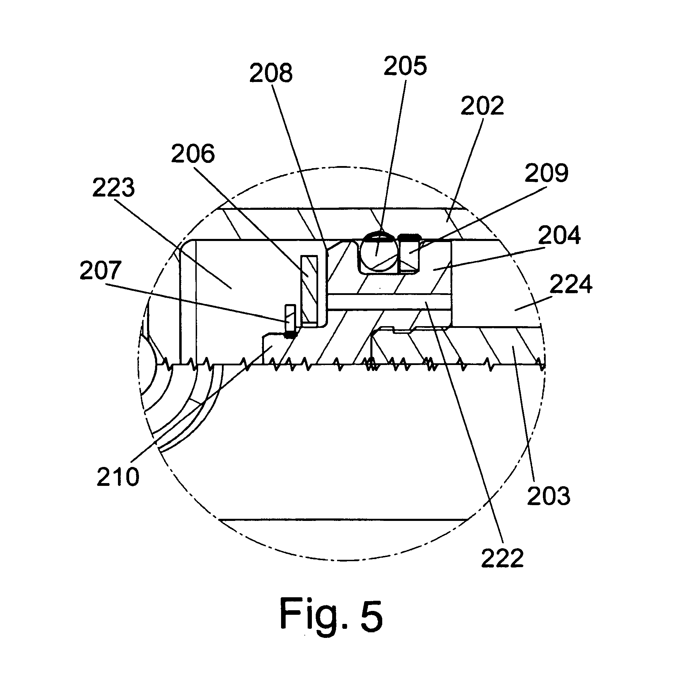

In Figur 5 ist ein im Bereich eines Kolbens 204 gegenüber dem Ausführungsbeispiel der Figur 1 leicht modifizierte Ausführungsbeispiel gezeigt. Der Kolben 204 ist in einem zylindrischen Gehäuse 202 des Dämpfers verschiebbar. Der Kolben 204 ist dabei über eine Rast- oder Bajonettverbindung an einer Kolbenstange 203 fixiert und weist mindestens einen axialen Strömungskanal 222 auf. Am äußeren Umfang des Kolbens 204 ist eine Nut vorgesehen in der ein als O-Ring ausgebildeter Dichtring 205 eingefügt ist, so dass die auf gegenüberliegenden Seiten des Kolbens 204 gebildeten Kammern 223 und 224 über den Kolben 204 und den Dichtring 205 voneinander getrennt sind. Benachbart zu dem Dichtring 205 ist in der Nut ein geschlitzter Stützring 209 aus einem steifen Material, wie Kunststoff oder Metall eingefügt, der ein Verschieben des Dichtringes 205 in der Nut vermeidet und den Dichtring 205 auch in axiale Richtung komprimieren kann. Denn bei hohen Drücken kann der Dichtring 205 in der Nut ansonsten so verrutschen, dass keine ausreichende Dichtigkeit mehr gewährleistet ist und der Dämpfer nicht mehr funktionstüchtig ist.

Auf der Seite der Kammer 223 ist an dem Kolben 204 eine Platte 206 vorgesehen, die an einem zylindrischen Fortsatz 210 durch einen Sprengring 207 axial gesichert ist. Die Platte 206 ist mit axialem Spiel zwischen dem Sprengring 207 und einer Seitenfläche 208 des Kolbens 204 gehalten, so dass bei einer Bewegung des Kolbens 204 die Platte 206 entweder an der Seitenfläche 208 oder am Sprengring 207 anliegt, und somit wie bei den vorangegangenen Ausführungsbeispielen ein Strömungskanal im Bereich von radialen Nuten an der Platte 206 und/oder an der Seitenfläche 208 vergrößert oder verkleinert wird.

Als Fluid wird für die gezeigten Dämpfer vorzugsweise ein Öl, insbesondere Silikonöl, eingesetzt, aber auch andere Fluide können zur Dämpfung verwendet werden.

## Patentansprüche

1. Dämpfer (101) für Möbel, insbesondere für Scharniere, mit einem Gehäuse (102, 202), in dem ein mit einer Kolbenstange (103, 203) verbundener Kolben (104, 204) verschiebbar aufgenommen ist, wobei ein Fluid bei einer Bewegung des Kolbens (104, 204) innerhalb des Gehäuses (102, 202) durch einen Strömungskanal (120) am oder im Kolben (104, 204) strömt, wobei bei Bewegung des Kolbens (104, 204) in unterschiedliche Richtungen eine unterschiedliche Dämpfungskraft erhalten wird und der Querschnitt des Strömungskanals (120) bereichsweise veränderbar ist, indem der Kolben (104, 204) relativ zu einer Platte (106, 206) bewegbar ist und die Platte (106, 206) und/oder der Kolben (104, 204) sich radial erstreckende Nuten (160) aufweist, die zumindest einen Teil des Strömungskanals (120) bilden, **dadurch gekennzeichnet, dass** an einer Seite des Gehäuses (102) ein bewegbarer Ausgleichskolben (107, 111) vorgesehen ist, der abgedichtet an dem Gehäuse (102) und der Kolbenstange (103) geführt ist und der Ausgleichskolben eine Dichtung (107) aufweist, die mit einer äußeren Dichtlippe (112) am Gehäuse (102) und mit einer inneren Dichtlippe (113) an der Kolbenstange (103) anliegt.

2. Dämpfer nach Anspruch 1, **dadurch gekennzeichnet, dass** der Kolben (104, 204) und die Platte (106, 206) gemeinsam an der Kolbenstange (103, 203) gelagert sind.

3. Dämpfer nach Anspruch 2, **dadurch gekennzeichnet, dass** die Platte an der Kolbenstange festgelegt ist und der Kolben mit axialem Spiel an der Kolbenstange gehalten ist.

4. Dämpfer nach Anspruch 2 oder 3, **dadurch gekennzeichnet, dass** der Kolben die Kolbenstange ringförmig umgibt und zwischen der Platte und einer Schulter an der Kolbenstange bewegbar gehalten ist.

5. Dämpfer nach Anspruch 2, **dadurch gekennzeichnet, dass** der Kolben (204) an der Kolbenstange (203) festgelegt ist und die Platte (206) mit axialem Spiel an der Kolbenstange (203) oder dem Kolben (204) gehalten ist.

6. Dämpfer nach einem der Ansprüche 1-5, **dadurch gekennzeichnet, dass** der radiale Strömungskanal (120) entlang der Nuten (160) bei am Kolben (104, 204) anliegender Platte (106, 206) der engste Teil des Strömungskanals ist.

7. Dämpfer nach einem der Ansprüche 1-6, **dadurch gekennzeichnet, dass** jeweils zwei diametral zur Kolbenachse sich gegenüberliegende Nuten (160) vorgesehen sind.

8. Dämpfer nach einem der Ansprüche 1-7, **dadurch gekennzeichnet, dass** die Platte an einer topfförmigen Aufnahme des Kolbens angeordnet ist.

9. Dämpfer nach einem der Ansprüche 1-8, **dadurch gekennzeichnet, dass** der Kolben eine zylindrische Aufnahme für die Kolbenstange aufweist und an der Aufnahme mindestens eine Ausnehmung zur Bildung eines Strömungskanals vorgesehen ist.

10. Dämpfer nach einem der Ansprüche 1-9, **dadurch gekennzeichnet, dass** zur Veränderung des Querschnitts des Strömungskanals (120) die Platte (106) biegbar ausgebildet ist.

11. Dämpfer nach Anspruch 10, **dadurch gekennzeichnet, dass** die Platte (106) als Scheibe aus Kunststoff, vorzugsweise aus einer Kunststofffolie, gebildet ist.

12. Dämpfer nach einem der Ansprüche 1 bis 11, **dadurch gekennzeichnet, dass** der Ausgleichskolben eine Dichtung (107) umfasst, die durch einen Haltering (111) gestützt ist.

13. Dämpfer nach einem der Ansprüche 1 bis 12, **dadurch gekennzeichnet, dass** der Ausgleichskolben (107, 111) durch eine Feder (110) zu dem Innenraum mit dem Kolben (104) hin vorgespannt ist.

14. Dämpfer nach Anspruch 13, **dadurch gekennzeichnet, dass** die Feder (110) an einem Deckel (109) abgestützt ist, der an dem Gehäuse (102) festgelegt ist und von der Kolbenstange (103) durchgriffen ist.

15. Dämpfer nach einem der Ansprüche 1-14, **dadurch gekennzeichnet, dass** an der Kolbenstange (103) Rastmittel (115), vorzugsweise mit biegbaren Schenkeln, zum Verbinden mit einem weiteren Bauteil vorgesehen sind.

16. Dämpfer nach einem der Ansprüche 1-15, **dadurch gekennzeichnet, dass** die Kraft zum Bewegen des Kolbens (104, 204) in gegenüberliegende Richtungen um den Faktor fünf, vorzugsweise um den Faktor 8 bis 12 unterschiedlich ist.

17. Dämpfer nach einem der Ansprüche 1-16, **dadurch gekennzeichnet, dass** der Kolben (204) an der Außenseite eine Nut mit einem Dichtring (205) zum Trennen der auf beiden Seiten des Kolbens (204) angeordneten Kammern (223, 224) aufweist, und in der Nut ein geschlitzter Stützring (209) aus einem steifen Material eingefügt ist.

## Claims

1. Damper (101) for furniture, in particular for hinges, with a housing (102, 202) in which a piston (104, 204), which is connected to a piston rod (103, 203), is displaceably accommodated, wherein, upon movement of the piston (104, 204) within the housing (102, 202), a fluid flows through a flow channel (120) on or in the piston (104, 204), and wherein, upon movement of the piston (104, 204) in different directions, a different damping force is obtained and the cross section of the flow channel (120) can be changed in regions by the piston (104, 204) being movable relative to a plate (106, 206) and the plate (106, 206) and/or the piston (104, 204) having radially extending grooves (160) which form at least part of the flow channel (120), **characterized in that** a movable compensating piston (107, 111) is provided on one side of the housing (102), said compensating piston being guided in a sealed manner on the housing (102) and the piston rod (103) and having a seal (107) which bears with an outer sealing lip (112) against the housing (102) and with an inner sealing lip (113) against the piston rod (103).

2. Damper according to Claim 1, **characterized in that** the piston (104, 204) and the plate (106, 206) are mounted together on the piston rod (103, 203).

3. Damper according to Claim 2, **characterized in that** the plate is fixed to the piston rod, and the piston is held with axial play on the piston rod.

4. Damper according to Claim 2 or 3, **characterized in that** the piston annularly surrounds the piston rod and is held movably between the plate and a shoulder on the piston rod.

5. Damper according to Claim 2, **characterized in that** the piston (204) is fixed to the piston rod (203), and the plate (206) is held with axial play on the piston rod (203) or the piston (204).

6. Damper according to one of Claims 1-5, **characterized in that** the radial flow channel (120) along the grooves (160) is the narrowest part of the flow channel with the plate (106, 206) bearing against the piston (104, 204).

7. Damper according to one of Claims 1-6, **characterized in that** two grooves (160) which are opposite each other diametrically with respect to the piston axis are in each case provided.

8. Damper according to one of Claims 1-7, **characterized in that** the plate is arranged on a cup-shaped receptacle of the piston.

9. Damper according to one of Claims 1-8, **characterized in that** the piston has a cylindrical receptacle for the piston rod, and at least one recess for forming a flow channel is provided on the receptacle.

10. Damper according to one of Claims 1-9, **characterized in that**, in order to change the cross section of the flow channel (120), the plate (106) is designed to be bendable.

11. Damper according to Claim 10, **characterized in that** the plate (106) is formed as a disc made of plastic, preferably made of a plastics sheet.

12. Damper according to one of Claims 1-11, **characterized in that** the compensating piston comprises a seal (107) which is supported by a retaining ring (111).

13. Damper according to one of Claims 1-12, **characterized in that** the compensating piston (107, 111) is prestressed towards the interior space with the piston (104) by a spring (110).

14. Damper according to Claim 13, **characterized in that** the spring (110) is supported on a cover (109) which is fixed to the housing (102) and through which the piston rod (103) reaches.

15. Damper according to one of Claims 1-14, **characterized in that** latching means (115), preferably with bendable limbs, are provided on the piston rod (103) with a connection to a further component.

16. Damper according to one of Claims 1-15, **characterized in that** the force for moving the piston (104, 204) in opposite directions differs by a factor of 5, preferably by a factor of 8 to 12.

17. Damper according to one of Claims 1-16, **characterized in that** the outside of the piston (204) has a groove with a sealing ring (205) for separating the chambers (223, 224) arranged on both sides of the piston (204), and a slotted supporting ring (209) made of a stiff material is fitted in the groove.

## Revendications

1. Amortisseur (101) pour meubles, en particulier pour des charnières, comprenant un boîtier (102, 202), dans lequel un piston (104, 204) relié à une tige de piston (103, 203) est reçu de manière mobile, dans lequel un fluide s'écoule lors d'un mouvement du piston (104, 204) dans le boîtier (102, 202) par un canal d'écoulement (120) sur ou dans le piston (104, 204), dans lequel un mouvement du piston (104, 204) dans différentes directions permet d'obtenir une force d'amortissement différente et la section du canal d'écoulement (120) pouvant être modifiée par endroits, tandis que le piston (104, 204) peut être déplacé par rapport à une plaque (106, 206) et la plaque (106, 206) et/ou le piston (104, 204) présente des rainures (160) qui s'étendent dans le sens radial et forment au moins une partie du canal d'écoulement (120), **caractérisé en ce qu'**un piston de compensation (107, 111) mobile est prévu sur un côté du boîtier (102), lequel est guidé de manière étanche sur le boîtier (102) et la tige de piston (103) et le piston de compensation présente une garniture (107), dont une lèvre d'étanchéité (112) extérieure repose sur le boîtier (102) et une lèvre d'étanchéité (113) intérieure repose sur la tige de piston (103).

2. Amortisseur selon la revendication 1, **caractérisé en ce que** le piston (104, 204) et la plaque (106, 206) sont logés ensemble sur la tige de piston (103, 203).

3. Amortisseur selon la revendication 2, **caractérisé en ce que** la plaque est fixée sur la tige de piston et le piston est maintenu avec un jeu axial sur la tige de piston.

4. Amortisseur selon la revendication 2 ou 3, **caractérisé en ce que** le piston entoure en forme d'anneau la tige de piston et est maintenu de manière mobile entre la plaque et un épaulement sur la tige de piston.

5. Amortisseur selon la revendication 2, **caractérisé en ce que** le piston (204) est fixé sur la tige de piston (203) et la plaque (206) est maintenue avec un jeu axial sur la tige de piston (203) ou le piston (204).

6. Amortisseur selon l'une quelconque des revendications 1 à 5, **caractérisé en ce que** le canal d'écoulement (120) radial le long des rainures (160), lorsque la plaque (106, 206) repose sur le piston (104, 204), est la partie la plus étroite du canal d'écoulement.

7. Amortisseur selon l'une quelconque des revendications 1 à 6, **caractérisé en ce que** respectivement deux rainures (160) diamétralement opposées à l'axe de piston sont prévues.

8. Amortisseur selon l'une quelconque des revendications 1 à 7, **caractérisé en ce que** la plaque est disposée sur un logement du piston en forme de pot.

9. Amortisseur selon l'une quelconque des revendications 1 à 8, **caractérisé en ce que** le piston présente un logement cylindrique pour la tige de piston et au moins un évidement pour la formation d'un canal d'écoulement est prévu sur le logement.

10. Amortisseur selon l'une quelconque des revendications 1 à 9, **caractérisé en ce que** la plaque (106) est réalisée de manière flexible pour la modification de la section du canal d'écoulement (120).

11. Amortisseur selon la revendication 10, **caractérisé en ce que** la plaque (106) est formée comme un disque en plastique, de préférence en un film plastique.

12. Amortisseur selon l'une quelconque des revendications 1 à 11, **caractérisé en ce que** le piston de compensation comporte une garniture (107) soutenue par un anneau de retenue (111).

13. Amortisseur selon l'une quelconque des revendications 1 à 12, **caractérisé en ce que** le piston de compensation (107, 111) est précontraint par un ressort (110) vers l'espace intérieur contenant le piston (104).

14. Amortisseur selon la revendication 13, **caractérisé en ce que** le ressort (110) est en appui contre un couvercle (109) qui est fixé sur le boîtier (102) et est traversé par la tige de piston (103).

15. Amortisseur selon l'une quelconque des revendications 1 à 14, **caractérisé en ce que** des moyens d'encliquetage (115), de préférence avec des branches flexibles, sont prévus sur la tige de piston (103) pour la liaison avec un autre composant.

16. Amortisseur selon l'une quelconque des revendications 1 à 15, **caractérisé en ce que** la force pour le mouvement du piston (104, 204) dans des directions opposées est différente du facteur cinq, de préférence du facteur 8 à 12.

17. Amortisseur selon l'une quelconque des revendications 1 à 16, **caractérisé en ce que** le piston (204) présente, sur le côté extérieur, une rainure avec une bague d'étanchéité (205) pour la séparation des chambres (223, 224) disposées des deux côtés du piston (204) et un anneau d'appui (209) fendu en un matériau rigide est inséré dans la rainure.
